# EUROPEAN PATENT APPLICATION

(11) **EP 4 428 716 A1**
(43) Date of publication of application: **11.09.2024**
(21) Application number: 22920038.1
(22) Date of filing: 20.12.2022
(51) Int. Cl.: G06F 16/9535

(54) **CONTENT SEARCH METHOD, APPARATUS AND DEVICE, AND MEDIUM**

(30) Priority: 17.01.2022 CN 202210050319
(71) Applicant: Beijing Zitiao Network Technology Co., Ltd., Beijing 100190 (CN)
(72) Inventor: LU, Jianxing, Beijing 100086 (CN)
(74) Representative: Dentons UK and Middle East LLP
(86) International application number: PCT/CN2022/140313
(87) International publication number: WO 2023/134407

(57) **Abstract**

The present disclosure relates to a content search method, apparatus, device, and a medium. The content search method comprises: receiving a search keyword, wherein the search keyword is related to a target scenic spot, the target scenic spot comprises a plurality of scenic spot regions, and the plurality of scenic spot regions are obtained by dividing a target scenic spot according to a geographic location and/or a scenic spot item; and displaying a plurality of search results on a search result page, wherein each search result comprises a scenic spot region identifier and at least one video content, which correspond to one scenic spot region.

## Description

### CROSS-REFERENCE TO RELATED APPLICATIONS

The present disclosure is based on and claims priority to the Chinese Patent Application No. 202210050319.X filed on January 17, 2022, the disclosure of which is incorporated by reference herein in its entirety.

### TECHNICAL FIELD

The present disclosure relates to the technical field of content search, and in particular to a content search method, apparatus, device, and a medium.

### BACKGROUND

With the development and rise of the tourism industry, users are paying more and more attention to the quality of travel. When users are about to visit or are currently visiting a certain scenic spot, they will generally first gain an in-depth understanding of the scenic spot and then make subsequent travel plans in order to obtain a good travel experience.

For example, a user may search for a certain scenic spot using a search engine to obtain search results for presenting the scenic spot.

### SUMMARY

In a first aspect, the present disclosure provides a content search method, comprising:
receiving a search keyword, wherein the search keyword is related to a target scenic spot, the target scenic spot comprises a plurality of scenic spot regions, and the plurality of scenic spot regions are obtained by dividing the target scenic spot according to a geographic location and/or a scenic spot item;
displaying a plurality of search results on a search result page, wherein each search result comprises a scenic spot region identifier and at least one video content, which correspond to one scenic spot region.

In a second aspect, the present disclosure provides a content search apparatus, comprising:
a keyword receiving unit configured to receive a search keyword, wherein the search keyword is related to a target scenic spot, the target scenic spot comprises a plurality of scenic spot regions, and the plurality of scenic spot regions are obtained by dividing the target scenic spot according to a geographic location and/or a scenic spot item;
a result display unit configured to display a plurality of search results on a search result page, wherein each search result comprises a scenic spot region identifier and at least one video content, which correspond to one scenic spot region.

In a third aspect, the present disclosure provides a content search device, comprising:
a processor;
a memory configured to store executable instructions;
wherein the processor is configured to read the executable instructions from the memory and execute the executable instructions to implement the content search method as recited in the first aspect.

In a fourth aspect, the present disclosure provides a computer-readable storage medium storing a computer program thereon, wherein the computer program, when executed by a processor, causes the processor to implement the content search method as recited in the first aspect.

In a fifth aspect, the present disclosure provides a computer program, comprising: instructions, which, when executed by a processor, cause the processor to perform the content search method as recited in the first aspect.

### BRIEF DESCRIPTION OF THE DRAWINGS

The above and other features, advantages and aspects of embodiments of the present disclosure will become more apparent with reference to the following detailed description taken in conjunction with the accompanying drawings. Throughout the drawings, the same or similar reference numerals refer to the same or similar elements. It should be understood that the drawings are schematic and that components and elements are not necessarily drawn to scale.
FIG. 1 is a schematic flowchart of a content search method provided by an embodiment of the present disclosure;
FIG. 2 is a schematic diagram of a search result page provided by an embodiment of the present disclosure;
FIG. 3 is a schematic diagram of another search result page provided by an embodiment of the present disclosure;
FIG. 4 is a schematic diagram of yet another search result page provided by an embodiment of the present disclosure;
FIG. 5 is a schematic diagram of a scenic spot details page provided by an embodiment of the present disclosure;
FIG. 6 is a schematic structural diagram of a content search apparatus provided by an embodiment of the present disclosure;
FIG. 7 is a schematic structural diagram of a content search device provided by an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure can be implemented in various forms and should not be construed as limited to the embodiments set forth herein. Instead, these embodiments are provided for a more thorough and complete understanding of the present disclosure. It should be understood that the drawings and embodiments of the present disclosure are for illustration purposes only and are not intended to limit the protection scope of the present disclosure.

It should be understood that the steps recited in method embodiments of the present disclosure may be performed in different orders and/or in parallel. Furthermore, method embodiments may include additional steps and/or omit performing the illustrated steps. The scope of the present disclosure is not limited in this respect.

The term "comprising" and variations thereof as used herein are open inclusions, i.e., "comprising but not limited to". The term "based on" means "based at least in part on. " The term "one embodiment" means "at least one embodiment"; the term "another embodiment" means "at least one additional embodiment"; and the term "some embodiments" means "at least some embodiments. " Relevant definitions of other terms will be given in the following description.

It should be noted that the concepts "first", "second", and the like mentioned in the present disclosure are only used to distinguish different devices, modules or units, and are not used to limit the order or interdependence of the functions performed by the devices, modules or units.

It should be noted that the modifications of "one" and "plurality" mentioned in the present disclosure are illustrative rather than restrictive, and those skilled in the art should understand that unless otherwise clearly indicated in the context, it should be understood as "one or more".

The names of messages or information exchanged between multiple devices in the embodiments of the present disclosure are only used for illustration purposes and are not intended to limit the scope of the messages or information.

Currently, when a user searches for a certain scenic spot using a search engine, the search results obtained for presenting the scenic spot are relatively simple and cannot meet the users' needs for an in-depth understanding of the scenic spot.

The embodiments of the present disclosure provide a content search method, apparatus and device, and a medium that can meet the users' needs for an in-depth understanding of scenic spots, and can solve the above-mentioned problem.

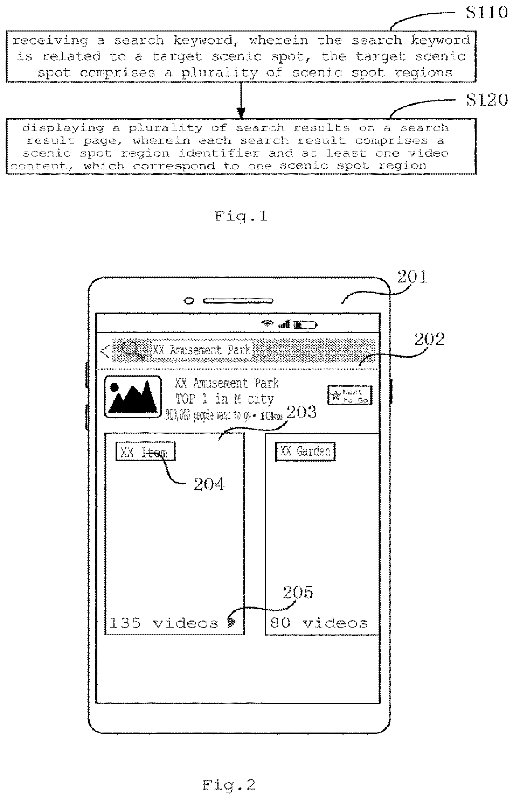

First, the content search method provided by an embodiment of the present disclosure is described in detail below with reference to FIGS. 1 to 5.

The content search method in the embodiment of the present disclosure may be performed by an electronic device. The electronic device may include, but is not limited to, a mobile terminal such as a mobile phone, a laptop computer, a digital broadcast receiver, a PDA (personal digital assistant), a PAD (tablet computer), a PMP (portable multimedia player), an in-vehicle terminal (e.g., an in-vehicle navigation terminal), and a wearable device, and a fixed terminal such as a digital TV, a desktop computer, and smart home appliance.

FIG. 1 is a schematic flowchart of a content search method provided by an embodiment of the present disclosure.

As shown in FIG. 1 , the content search method may comprise the following steps.

S110: receiving a search keyword, wherein the search keyword is related to a target scenic spot, and the target scenic spot comprises a plurality of scenic spot regions.

In an embodiment of the present disclosure, when a user wants to have an in-depth understanding of a scenic spot, the user may enter a search keyword for searching for the scenic spot on a content search page of a specific application or a specific website on an electronic device, so that the electronic device can receive the search keyword and perform a search operation with respect to the search keyword to feed back a search result with respect to the search keyword.

In some embodiments, a user may enter information in any form, such as text, voice, or image, within a search box on a content search page, so that the electronic device uses the text corresponding to the information entered by the user as the search keyword entered by the user.

For example, a user may enter textual information within a search box on a content search page, and the electronic device may use the textual information as a search keyword.

For another example, a user may enter voice information within a search box on a content search page, and the electronic device may perform voice recognition processing on the voice information to obtain voice text, and then use the voice text as a search keyword.

For another example, a user may enter image information within a search box on a content search page, and the electronic device may perform image text recognition processing or image content recognition processing on the image information to obtain image text, and then use the image text as a search keyword.

In other embodiments, a plurality of candidate keywords may be displayed on the content search page, and the user may select from the displayed candidate keywords, so that the electronic device uses the candidate keyword selected by the user as the search keyword.

In an embodiment of the present disclosure, after receiving the search keyword entered by the user, the electronic device may send the search keyword to a server. The server may determine a target scenic spot based on the search keyword, search for the target scenic spot, and obtain a search result related to the target scenic spot.

In some embodiments, the target scenic spot is a scenic spot related to the search keyword.

Specifically, the search keyword received by the electronic device may not be a standard full name of the scenic spot. In this case, the server needs to identify the search keyword, clarify the user's needs, and then perform analysis and obtain the target scenic spot related to the search keyword.

In order to improve the accuracy of search keyword recognition, the server will pre-match different scenic spots with scenic spot abbreviations that are commonly used by users, and store scenic spot full names, scenic spot abbreviations, and geographic locations of the scenic spots in a scenic spot database in association with each other.

At this time, when the search keyword received by the server is "XX Amusement Park", that is, the search keyword contains the full name of the scenic spot, the target scenic spot whose full name is "XX Amusement Park" can be found in the scenic spot database; when the search keyword received by the server is "XX Park", that is, the search keyword contains the abbreviation of the scenic spot, the target scenic spot whose full name is "XX Amusement Park" can also be found in the scenic spot database; when the search keyword received by the server is "M-City scenic spot", that is, the search keyword contains a geographic location of the scenic spot, the target scenic spot whose geographic location is "M-City scenic spot" can also be found in the scenic spot database.

Optionally, the geographic location may be a geographic location at any administrative level, which is not limited here.

Furthermore, when the search keyword includes a geographic location, the target scenic spot may be a plurality of scenic spots within the geographic location.

In some embodiments of the present disclosure, there may be scenic spots with the same scenic spot full names within different geographic locations. When a search keyword contains a scenic spot full name or a scenic spot abbreviation, the server may match a plurality of scenic spots therewith only through the search keyword.

Optionally, with the user's authorization, the electronic device may further obtain the user's real-time geographic location and send the real-time geographic location to the server, so that the server finds a target scenic spot that is the same as or closest to the real-time geographic location among the plurality of scenic spots matched through the search keyword.

In an embodiment of the present disclosure, the target scenic spot comprises a plurality of scenic spot regions, wherein the plurality of scenic spot regions may be obtained by dividing the target scenic spot according to at least one of a geographic location or a scenic spot item.

Specifically, the scenic spot regions may be regions obtained by dividing the target scenic spot according to a geographic location, regions obtained by dividing the target scenic spot according to a scenic spot item, or regions obtained by dividing the target scenic spot according to the geographic location and the scenic spot item.

The geographic location may include the location of theme parks, the location of scenery zones, etc. in the scenic spot. The scenic spot item may include entertainment items, service items, or business items in the scenic spot.

The granularity of the scenic spot regions obtained by dividing according to a scenic spot item is finer than that of the scenic spot regions obtained by dividing according to a geographic location, that is, the scenic spot regions obtained by dividing according to a geographic location may include at least one scenic spot region obtained by dividing according to a scenic spot item.

S120: displaying a plurality of search results on a search result page, wherein each search result comprises a scenic spot region identifier and at least one video content, which correspond to one scenic spot region.

In an embodiment of the present disclosure, after determining the target scenic spot based on the search keyword, the server may recall search results related to the target scenic spot.

Specifically, the target scenic spot is a real geographic area, which a large number of tourists may have toured or visited. The tourists who have toured or visited this geographic area may record and post a large amount of video contents based on their own subj ective feelings. The server may recall at least one video content related to the target scenic spot from the large amount of video contents posted by the tourists.

Since the video content is recorded based on the tourists' subjective feelings, the recalled video content provides rich presentation angles for the target scenic spot, thereby meeting the users' needs for an in-depth understanding of the target scenic spot.

Further, when a tourist posts video content, he or she may add a scenic spot region identifier corresponding to the scenic spot region to which the video content belongs, so that the posted video content may be stored in association with the scenic spot region identifier corresponding to the scenic spot region to which the video content belongs. When the server recalls at least one video content, it is possible to recall the video content for all scenic spot regions of the target scenic spot respectively, and when the video content is recalled for each scenic spot region, it is possible to concurrently recall at least one video content corresponding to the scenic spot region and a scenic spot region identifier stored in association with the at least one video content, thereby forming a plurality of search results based on the recalled scenic spot region identifier and video content.

For example, after recalling a plurality of video contents and scenic spot region identifiers, the server may generate a search result from the video content with the same scenic spot region identifier and the corresponding scenic spot region identifier, so that at least one video content in the search result may correspond to one same scenic spot region.

Specifically, the respective video contents recalled by the server may satisfy one or more of the following conditions:

The video content is highly popular content, that is, at least one of the play count, the number of likes, the number of comments, etc., of the video content reaches a corresponding minimum threshold;

The video content is high-quality content, that is, the video content has no jitter or the like, and the screen content proportion of the video content reaches a corresponding minimum threshold;

The video content is recent content, that is, the video content was posted within the past year and a half.

In this way, video content that is preferable in terms of popularity, quality, or freshness can be selected for users to watch.

Furthermore, the server may feed back a plurality of recalled search results to the electronic device, and the electronic device may display the plurality of search results received from the server on the search result page. In an embodiment of the present disclosure, the display manner of the plurality of search results is not limited.

In an embodiment of the present disclosure, optionally, the content type of the video content includes at least one of a scenic spot explanation type, a scenery presentation type, or a highlight moment presentation type.

When the content type of the video content includes a scenic spot explanation type, the video content may contain pictures recorded by tourists for explaining the scenic spot region to which the video content belongs; when the content type of the video content includes a scenery presentation type, the video content may contain pictures recorded by tourists of the scenery within the scenic spot region to which the video content belongs; when the content type of the video content includes a highlight moment presentation type, the video content may contain pictures recorded by tourists of highlight moments of the scenery, entertainment items, service items, or business items, etc. within the scenic spot region to which the video content belongs.

In an embodiment of the present disclosure, optionally, a scenic spot region identifier corresponding to a scenic spot region may be a tag used to characterize the scenic spot region.

In an embodiment of the present disclosure, after receiving a search keyword related to a target scenic spot, a plurality of search results can be displayed on a search result page, wherein each of the plurality of search results may comprise a scenic spot region identifier and at least one video content, which correspond to one scenic spot region, and each scenic spot region identifier corresponds to a scenic spot region obtained by dividing the target scenic spot according to at least one division method, so that the plurality of search results can present different scenic spot regions in the target scenic spot, thereby enriching the presentation angle for the target scenic spot and meeting the users' needs for an in-depth understanding of the scenic spot.

In an implementation mode of the present disclosure, the electronic device may display a plurality of search results in a structured manner.

In some embodiments of the present disclosure, S120 may specifically comprise: displaying the plurality of search results in a horizontal or vertical arrangement in a first display order on the search result page.

The first display order may be determined according to the popularity of the scenic spot regions corresponding to the search results, and the popularity of the scenic spot regions is determined according to the total number of videos posted by tourists who have toured the scenic spot regions.

Specifically, after recalling the plurality of search results, the server may determine the total number of videos corresponding to the scenic spot region to which each search result belongs, use the total number of videos corresponding to each scenic spot region as the popularity of the scenic spot region, then rank the scenic spot regions in the order of popularity from high to low to obtain the first display order, and further synchronously feed back the first display order when feeding back the plurality of search results to the electronic device. Therefore, after obtaining the plurality of search results, the electronic device may display the search results corresponding to each scenic spot region in a horizontal or vertical arrangement in the first display order.

In some embodiments, displaying the plurality of search results in a horizontal or vertical arrangement in a first display order may specifically comprise: displaying a scenic spot region identifier and a first video content in each search result in the first display order.

Optionally, the scenic spot region identifier may be displayed in a corner of the video content, or may be displayed above or below the video content, to characterize that the video content belongs to the scenic spot region corresponding to the scenic spot region identifier.

Optionally, the first video content may be determined according to a second display order corresponding to the search result to which the first video content belongs, and the second display order is determined according to at least one of the popularity, quality or post time of the video contents in the search result to which the first video content belongs.

Specifically, after recalling a search result, the server may obtain at least one of the popularity, quality or post time of the video contents in the search result, then score each video content based on at least one of the popularity, quality or post time obtained, after that, rank the video contents in the search result in order of scores from high to low to obtain the second display order, and further synchronously feed back the second display order when feeding back the search result to the electronic device. Therefore, after obtaining the search result, the electronic device may determine and display the first video content in the search result according to the second display order.

The popularity of each video content is calculated based on the play count, the number of likes, or the number of comments of the video content.

FIG. 2 is a schematic diagram of a search result page provided by an embodiment of the present disclosure.

As shown in FIG. 2, an electronic device 201 displays a search result page 202 corresponding to the scenic spot "XX Amusement Park", and on the search result page 202 is displayed a plurality of search results in a horizontal arrangement in order of the total number of videos corresponding to a scenic spot region from high to low. Taking the scenic spot region "XX Item" as an example, search results of the scenic spot region "XX Item" contain 135 video contents, a first video content 203 of the scenic spot region "XX Item" is displayed on the search result page 202, and a scenic spot region identifier 204 of the scenic spot region "XX Item" is displayed on the first video content 203 in a superimposed manner.

Furthermore, after displaying the plurality of search results on the search result page, the content search method may further comprise: in response to a first trigger operation on a target search result among the plurality of search results, starting with a first video content in the target search result, playing the video contents in the target search result in sequence.

The target search result may be a search result operated by the first trigger operation among the plurality of search results.

The first trigger operation may be an operation for triggering playing of the video content in the target search result. For example, the first trigger operation is a click, long press, double click or the like on the first video content in the target search result. For another example, the first trigger operation is a click, long press, double click or the like on a play control on the first video content in the target search result.

The play control may be any button, icon, or the like that can control the play status of the video content in the target search result.

Continuing with reference to FIG. 2, a user may click a play button 205 on the first video content 203 of the scenic spot region "XX Item". After the user clicks the play button 205, the electronic device 201 may play the 135 video contents in the search results of the scenic spot region "XX Item" in sequence, according to the order in which the 135 video contents in the search results of the scenic spot region "XX Item" are displayed, starting from the first video content 203 of the scenic spot region "XX Item".

In some other embodiments, displaying the plurality of search results in a horizontal or vertical arrangement in a first display order may specifically comprise: displaying the scenic spot region identifier and a first preset number of video contents in each search result in the first display order.

Optionally, the scenic spot region identifier may be displayed in a corner of the video content, or may be displayed above or below the video content, to characterize that the video content belongs to the scenic spot region corresponding to the scenic spot region identifier.

Optionally, the first preset number of video contents are determined according to a second display order corresponding to the search result to which the first preset number of video contents belong, and the second display order is determined according to at least one of the popularity, quality or post time of the video contents in the search result to which the first preset number of video contents belong.

The preset number may be any number set in advance as needed, which is not limited here.

Specifically, after recalling a search result, the server may obtain at least one of the popularity, quality or post time of the video contents in the search result, then score each video content based on at least one of the popularity, quality and post time obtained, rank the video contents in the search result in order of scores from high to low to obtain the second display order, and further synchronously feed back the second display order when feeding back the search result to the electronic device. Therefore, after obtaining the search result, the electronic device may determine and display the first video content in the search result according to the second display order.

The popularity of each video content is calculated based on the play count, the number of likes, the number of comments or the like of the video content.

Furthermore, the electronic device may first determine the first scenic spot region according to the first display order, then determine the first preset number of video contents in the search results corresponding to the first scenic spot region according to the second display order of the search results corresponding to the first scenic spot region, after that, determine the second scenic spot region according to the first display order, and then determine the first preset number of video contents in the search results corresponding to the second scenic spot region according to the second display order of the search results corresponding to the second scenic spot region, and so on. Further, on the search result page, the first preset number of video contents in the search results corresponding to the first scenic spot region are displayed in the second display order of the search results corresponding to the first scenic spot region, and then the first preset number of video contents in the search results corresponding to the second scenic spot region are displayed in the second display order of the search results corresponding to the second scenic spot region, and so on.

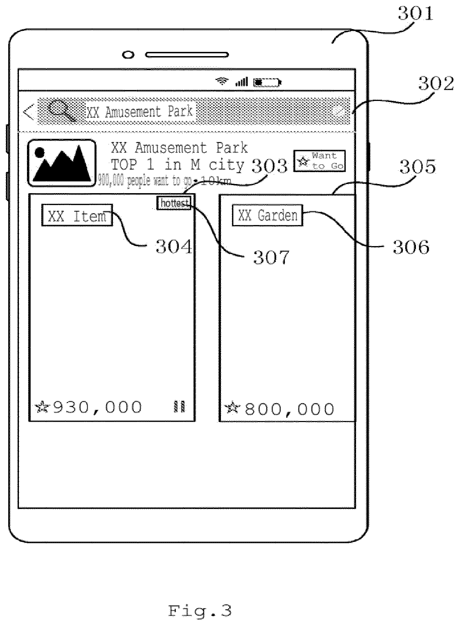

FIG. 3 is a schematic diagram of another search result page provided by an embodiment of the present disclosure.

As shown in FIG. 3, an electronic device 301 displays a search result page 302 corresponding to the scenic spot "XX Amusement Park", and on the search result page 302 is displayed a plurality of search results in a horizontal arrangement in order of the total number of videos corresponding to the scenic spot region from high to low. Taking the scenic spot region "XX Item" as an example, a first video content 303 in a search result of the scenic spot region "XX item" is displayed on the search result page 302, and a scenic spot region identifier 304 of the scenic spot region "XX Item" is displayed on the video content 303 in a superimposed manner. Taking the scenic spot region "XX Garden" as another example, a first video content 305 in a search result of the scenic spot region "XX Garden" is displayed on the search result page 302, and a scenic spot region identifier 306 of the scenic spot region "XX Garden" is displayed on the video content 305 in a superimposed manner.

Furthermore, after displaying the plurality of search results on the search result page, the content search method may further comprise: in response to a second trigger operation on the plurality of search results, playing the video contents that are completely displayed on the search result page in sequence in a display order of the video contents.

The second trigger operation may be an operation for triggering a change in the video contents displayed on the search result page. For example, the second trigger operation may be a sliding operation along the direction in which the video contents are arranged.

Taking the plurality of video contents being displayed in a horizontal arrangement as an example, when the electronic device receives the user's sliding operation from right to left, the video contents displayed on the search result page may be updated.

Optionally, in the process of performing the second trigger operation by the user, the electronic device may automatically play the video contents that are completely displayed on the search result page in sequence in a display order of the video contents.

In some other embodiments of the present disclosure, each search result may further include a video tag corresponding to each video content, which is used to suggest a reason for presenting the video content.

Specifically, the video tag may include a hottest tag to prompt the user that the video content is of the highest popularity; the video tag may also include a latest tag to prompt the user that the video content was posted most recently; the video tag may also include a high-quality tag to prompt the user that the video content is of the best quality.

With continued reference to FIG. 3, a video tag 307 is displayed on the video content 303 in a superimposed manner, and the video tag 307 is a hottest tag, which may prompt the user that the video content 303 is the video content of the highest popularity in the XX Item.

In summary, in an embodiment of the present disclosure, a plurality of search results on a search result page may form a scenic spot card, as the main demand of the user for the scenic spot card is to find and understand relevant information of scenery zones of the scenic spot. In order to improve the efficiency of the user, the structured presentation form can be organized in a video manner, so that the user can not only see the real situation in the scenery zones of the scenic spot at a glance by watching the video contents, but also be presented with the scenery zone full views of the scenic spot through the structured organization form.

In another implementation mode of the present disclosure, the electronic device may display a plurality of search results in a visualized manner.

Optionally, before S120, the content search method may further comprise: obtaining a real-time geographic location.

Correspondingly, S120 may specifically comprise: displaying a scenic spot map corresponding to the real-time geographic location on the search result page, the scenic spot map including a plurality of map regions each belonging to a scenic spot region; for each map region, displaying, in the map region, a search result corresponding to the scenic spot region to which the map region belongs.

Specifically, with the user's authorization, the electronic device may also obtain the user's real-time geographic location and send it to the server, so that the server returns a map of a scenic spot portion of a target scenic spot that includes the real-time geographic location while returning at least one search result, and the map of the scenic spot portion of the target scenic spot that includes the real-time geographic location is namely a scenic spot map corresponding to the real-time geographic location.

The scenic spot map may include a plurality of map regions each belonging to a scenic spot region, that is, the map region is associated with a scenic spot region identifier of a scenic spot region. Therefore, the electronic device may display the scenic spot map corresponding to the real-time geographic location on the search result page, and display a search result corresponding to the scenic spot region identifier associated with the map region in each map region in the scenic spot map, that is, display the search result corresponding to the scenic spot region to which the map region belongs in each map region in the scenic spot map.

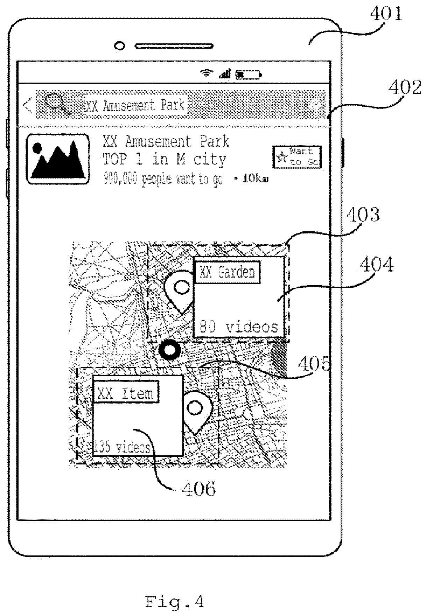

FIG. 4 is a schematic diagram of another search result page provided by an embodiment of the present disclosure.

As shown in FIG. 4, an electronic device 401 displays a search result page 402 corresponding to the scenic spot "XX Amusement Park", and on the search result page 402 is displayed a scenic spot map near the user's real-time geographic location, the scenic spot map including a first map region 403 and a second map region 405. The first map region 403 corresponds to the scenic spot region "XX Garden", and a search result 404 of the scenic spot region "XX Garden" is displayed on the first map region 403 in a superimposed manner. The search result 404 includes 80 video contents, and a scenic spot region identifier of the scenic spot region "XX Garden" is displayed on the search result 404 in a superimposed manner. The first map region 405 corresponds to the scenic spot region "XX Item", and a search result 406 of the scenic spot region "XX Item" is displayed on the first map region 405 in a superimposed manner. The search result 406 includes 135 video contents, and a scenic spot region identifier of the scenic spot region "XX Item" is displayed on the search result 406 in a superimposed manner.

Specifically, a first video content in each search result may be displayed in the search result. The user may click on the first video content in the search result, and after the user clicks on the first video content in the search result, the electronic device may play the video contents in the search result in sequence in the order in which the video contents in the search result are displayed, starting from the first video content in the search result.

In an embodiment of the present disclosure, a plurality of search results on the search result page may be presented in a visualized map form, so that when the user at a scenic spot is interested in the scenic spot region to which the video content belongs, he or she may learn through the map how to reach the scenic spot region of interest, thereby further enhancing the user experience.

In yet another implementation mode of the present disclosure, after presenting the search result to the user, it is also possible to let the user complete a scenic spot service reservation for the target scenic spot at the same time.

In some embodiments of the present disclosure, after S110, the content search method may further comprise: displaying relevant information of the target scenic spot on the search result page.

The relevant information of the target scenic spot may include at least one of scenic spot information of the target scenic spot, ticketing information of the target scenic spot, or rating information of the target scenic spot.

Furthermore, the scenic spot information may include name of a scenic spot, ranking of the scenic spot, attention level of the scenic spot, a distance between the scenic spot and the user's real-time geographic location, the geographic location of the scenic spot, navigation information of the scenic spot, contact information of the scenic spot, opening hours of the scenic spot or the per capita consumption of the scenic spot, etc.

The ticketing information may include scenic spot ticket information, item ticket information, group purchase package information, etc.

The rating information may include historical ratings of the scenic spot by tourists who have visited or toured the scenic spot.

Specifically, the electronic device may receive the relevant information of the target scenic spot fed back by the server, and display the relevant information of the target scenic spot in a display area above and/or below the plurality of search results on the search result page.

In some other embodiments of the present disclosure, the electronic device may further display a jump entry on the search result page, wherein the jump entry may be a button, link, icon or the like for triggering a jump to a scenic spot details page. By clicking on the jump entry, the user may also have the electronic device jump to the scenic spot details page displaying the target scenic spot.

For example, the jump entry may be the scenic spot name "XX Amusement Park" displayed in the header of the search result page, and the user may click on the scenic spot name "XX Amusement Park" to have the electronic device jump to the scenic spot details page displaying the scenic spot "XX Amusement Park".

In an embodiment of the present disclosure, the scenic spot details page may display the relevant information of the target scenic spot and the plurality of search results.

The relevant information of the target scenic spot may include at least one of scenic spot information of the target scenic spot, ticketing information of the target scenic spot, or rating information of the target scenic spot.

Furthermore, the scenic spot information may include name of a scenic spot, ranking of the scenic spot, attention level of the scenic spot, a distance between the scenic spot and the user's real-time geographic location, the geographic location of the scenic spot, navigation information of the scenic spot, contact information of the scenic spot, opening hours of the scenic spot or the per capita consumption of the scenic spot, etc.

The ticketing information may include scenic spot ticket information, item ticket information, group purchase package information, etc.

The rating information may include historical ratings of the scenic spot by tourists who have visited or toured the scenic spot.

Optionally, the scenic spot details page may display respective pieces of relevant information in sequence from top to bottom, and display a plurality of search results below the respective pieces of relevant information.

Specifically, the electronic device may display a plurality of search results horizontally in the first display order on the scenic spot details page. A first video content in each search result may be displayed in the search result. The user may click on the first video content in the search result, and after the user clicks on the first video content in the search result, the electronic device may play the video contents in the search result in sequence in the order in which the video contents in the search result are displayed, starting from the first video content in the search result.

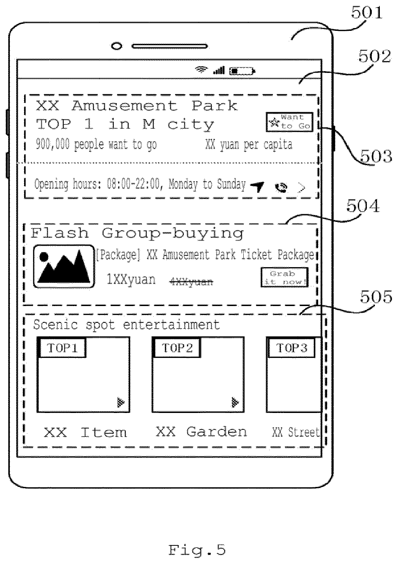

FIG. 5 is a schematic diagram of a scenic spot details page provided by an embodiment of the present disclosure.

As shown in FIG. 5, an electronic device 501 displays a scenic spot details page 502 corresponding to the scenic spot "XX Amusement Park", and in the header of the scenic spot details page 502 is displayed scenic spot information 503 of the scenic spot "XX Amusement Park", and below the scenic spot information 503 is displayed ticketing information 504 of the scenic spot "XX Amusement Park". Below the ticketing information 504 are displayed a plurality of search results 505 in a horizontal arrangement in order of the popularity of a scenic spot region from high to low. Taking the scenic spot region "XX Item" as an example, a first video content of the scenic spot region "XX Item" is displayed in a search result of the scenic spot region "XX Item", and a scenic spot region identifier of the scenic spot region "XX Item" is displayed below the first video content.

Therefore, in an embodiment of the present disclosure, the user may quickly find the information he or she wants to know by viewing a search result page, and directly enter a details page of a scenic spot, if he or she is interested in the scenic spot, to make a scenic spot service reservation, so that while learning about the corresponding scenic spot guide and longing to go there by searching for and watching videos, the user can complete the scenic spot service reservation, and finally go there when being offline, thus forming a full-link closed-loop search experience.

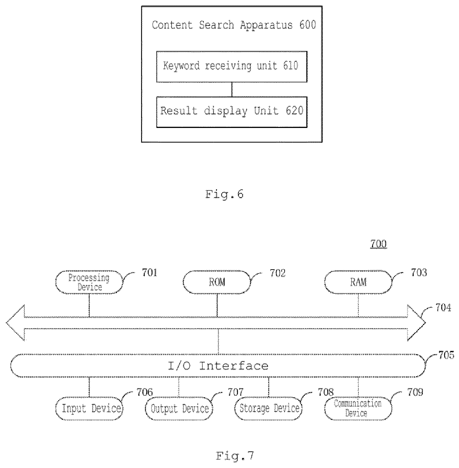

With continued reference to FIG. 6, a content search apparatus provided by an embodiment of the present disclosure is described in detail below.

The content search apparatus in the embodiment of the present disclosure may be provided in an electronic device. The electronic device may include but is not limited to a mobile terminal such as a mobile phone, a laptop computer, a digital broadcast receiver, a PDA, a PAD, a PMP, an in-vehicle terminal, and a wearable device, and a fixed terminal such as a digital TV, a desktop computer, and smart home appliance.

As shown in FIG. 6 , the content search apparatus 600 may comprise a keyword receiving unit 610 and a result display unit 620.

The keyword receiving unit 610 may be configured to receive a search keyword, wherein the search keyword is related to a target scenic spot, the target scenic spot comprises a plurality of scenic spot regions, and the plurality of scenic spot regions are obtained by dividing the target scenic spot according to at least one of a geographic location or a scenic spot item.

The result display unit 620 may be configured to display a plurality of search results on a search result page, wherein each search result comprises a scenic spot region identifier and at least one video content, which correspond to one scenic spot region.

In an embodiment of the present disclosure, after receiving a search keyword related to a target scenic spot, a plurality of search results can be displayed on a search result page, wherein each of the plurality of search results may comprise a scenic spot region identifier and at least one video content, which correspond to one scenic spot region, and each scenic spot region identifier corresponds to a scenic spot region obtained by dividing the target scenic spot according to at least one division method, so that the plurality of search results can present different scenic spot regions in the target scenic spot, thereby enriching the presentation angle for the target scenic spot and meeting the users' needs for an in-depth understanding of the scenic spot.

In some embodiments of the present disclosure, the result display unit 620 may comprise a first display subunit, which may be configured to display the plurality of search results in a horizontal or vertical arrangement in a first display order on the search result page.

Correspondingly, the first display order may be determined according to the popularity of the scenic spot regions corresponding to the search results, and the popularity of the scenic spot regions may be determined according to the total number of videos posted by tourists who have toured the scenic spot regions.

In some embodiments of the present disclosure, the first display subunit may be further configured to display a scenic spot region identifier and a first video content in each search result in the first display order.

Correspondingly, the first video content may be determined according to a second display order corresponding to the search result to which the first video content belongs, and the second display order may be determined according to at least one of the popularity, quality or post time of the video contents in the search result to which the first video content belongs.

In some embodiments of the present disclosure, the content search apparatus 600 may further comprise a first play unit, which may be configured to, after displaying the plurality of search results on the search result page, in response to a first trigger operation on a target search result among the plurality of search results, starting with a first video content in the target search result, play the video contents in the target search result in sequence.

In some embodiments of the present disclosure, the first display subunit may be further configured to display the scenic spot region identifier and a first preset number of video contents in each search result in the first display order.

Correspondingly, the first preset number of video contents may be determined according to a second display order corresponding to the search result to which the first preset number of video contents belong, and the second display order may be determined according to at least one of the popularity, quality and post time of the video contents in the search result to which the first preset number of video contents belong.

In some embodiments of the present disclosure, the popularity of each video content is determined based on at least one of the play count, the number of likes, or the number of comments of the video content; alternatively, the quality of each video content is determined based on the jitter of the video content, or the screen content proportion of the video content.

In some embodiments of the present disclosure, the content search apparatus 600 may further comprise a second play unit, which may be configured to, after displaying the plurality of search results on the search result page, in response to a second trigger operation on the plurality of search results, play the video contents that are completely displayed on the search result page in sequence in a display order of the video contents.

In some embodiments of the present disclosure, each search result may further include a video tag corresponding to each video content, which may be used to suggest a reason for presenting the video content.

In some embodiments of the present disclosure, the result display unit 620 may comprise a second display subunit and a third display subunit.

The second display subunit may be configured to display a scenic spot map corresponding to the real-time geographic location on the search result page, the scenic spot map including a plurality of map regions each belonging to a scenic spot region.

The third display subunit may be configured to display, for each map region, a search result corresponding to the scenic spot region to which the map region belongs in the map region.

In some embodiments of the present disclosure, the real-time geographic location is obtained before displaying the plurality of search results on the search result page.

In some embodiments of the present disclosure, the content type of the video content may include at least one of a scenic spot explanation type, a scenery presentation type, or a highlight moment presentation type.

In some embodiments of the present disclosure, the content search apparatus 600 may further comprise an information display unit, which may be configured to display relevant information of the target scenic spot on the search result page after receiving the search keyword.

The relevant information of the target scenic spot may include at least one of scenic spot information of the target scenic spot, ticketing information of the target scenic spot, or rating information of the target scenic spot.

It should be noted that the content search apparatus 600 shown in FIG. 6 may execute the respective steps in the method embodiment shown in FIG. 1 , and realize the respective processes and effects in the method embodiment shown in FIG. 1, which will not be described in detail here.

An embodiment of the present disclosure further provides a content search device, which may comprise a processor, and a memory that may be configured to store executable instructions, wherein the processor may be configured to read the executable instructions from the memory and execute the executable instructions to implement the content search method in the above embodiment.

FIG. 7 is a schematic structural diagram of a content search device provided by an embodiment of the present disclosure. Below, reference is made specifically to FIG. 7, which is a schematic structural diagram of a content search device 700 suitable for implementing the embodiment of the present disclosure.

The content search device 700 in the embodiment of the present disclosure may be an electronic device, wherein the electronic device may include, but is not limited to, a mobile terminal such as a mobile phone, a laptop computer, a digital broadcast receiver, a PDA, a PAD, a PMP, an in-vehicle terminal, and a wearable device, and a fixed terminal such as a digital TV, a desktop computer, and smart home appliance.

It should be noted that the content search device 700 shown in FIG. 7 is merely an example and should not bring any limitation to the functions and scope of use of the embodiment of the present disclosure.

As shown in FIG. 7, the content search device 700 may comprise a processing device (such as a central processing unit, and a graphics processing unit) 701, which may perform various appropriate actions and processes according to a program stored in a read-only memory (ROM) 702 or a program loaded from a storage device 708 to a random access memory (RAM) 703. In the RAM 703 are also stored various programs and data necessary for the operation of the content search device 700. The processing device 701, the ROM 702, and the R_AM 703 are connected to each other via a bus 704. An input/output (I/O) interface 705 is also connected to the bus 704.

Typically, the following devices may be connected to the I/O interface 705: an input device 706 including, for example, a touch screen, a touchpad, a keyboard, a mouse, a camera, a microphone, an accelerometer, a gyroscope, etc.; an output device 707 including, for example, a liquid crystal display (LCD), a speaker, a vibrator, etc.; a storage device 708 including, for example, a magnetic tape, a hard disk, etc.; and a communication device 709. The communication device 709 may allow the content search device 700 to perform wireless or wired communication with other devices to exchange data. While FIG. 7 shows the content search device 700 having various devices, it should be understood that it is not required to implement or possess all of the devices shown. More or fewer devices may alternatively be implemented or provided.

An embodiment of the present disclosure further provides a computer-readable storage medium, which stores a computer program, wherein the computer program, when executed by a processor, causes the processor to implement the content search method in the above embodiment.

In particular, according to an embodiment of the present disclosure, the process described above with reference to the flowchart may be implemented as a computer software program. For example, an embodiment of the present disclosure comprises a computer program product, which includes a computer program carried on a non-transitory computer-readable medium, wherein the computer program contains program codes for performing the method shown in the flowchart. In such an embodiment, the computer program may be downloaded and installed from a network via the communication device 709, or installed from the storage device 708, or installed from the ROM 702. The computer program, when executed by the processing device 701, implements the above functions defined in the content search method in the embodiment of the present disclosure.

It should be noted that the computer-readable medium mentioned above in the present disclosure may be a computer-readable signal medium or a computer-readable storage medium or any combination of the two. The computer readable storage medium may be, for example but not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer readable storage medium may be any tangible medium that contains or stores a program for use by or in connection with an instruction execution system, apparatus, or device. In the present disclosure, the computer-readable signal medium may include a data signal propagated in a baseband or as a part of a carrier wave, in which computer-readable program code is carried. Such a propagated data signal may take a variety of forms, including but not limited to an electromagnetic signal, an optical signal, or any suitable combination thereof. The computer-readable signal medium may also be any computer-readable medium other than the computer-readable storage medium and may send, propagate, or transmit a program for use by or in connection with an instruction execution system, apparatus, or device. The program code embodied on the computer-readable medium may be transmitted using any appropriate medium, including but not limited to: wires, optical cables, RF (radio frequency), etc., or any suitable combination thereof.

In some embodiments, clients and servers may communicate using any currently known or future developed network protocol such as HTTP, and may be interconnected by any form or medium of digital data communication (e.g., a communication network). Examples of the communication network include a local region network ("LAN"), a wide region network ("WAN"), an internetwork (e.g., the Internet), and a peer-to-peer network (e.g., an ad hoc peer-to-peer network), as well as any currently known or future developed network.

The computer-readable medium may be included in the content search device, or may exist independently without being incorporated into the content search device.

The computer-readable medium carries one or more programs, which, when executed by the content search device, causes the content search device to perform:
receiving a search keyword, wherein the search keyword is related to a target scenic spot, the target scenic spot comprises a plurality of scenic spot regions, and the plurality of scenic spot regions are obtained by dividing the target scenic spot according to a geographic location and/or a scenic spot item; displaying a plurality of search results on a search result page, wherein each search result comprises a scenic spot region identifier and at least one video content, which correspond to one scenic spot region.

In an embodiment of the present disclosure, computer program code for carrying out operations of the present disclosure may be written in one or more programming languages, including but not limited to an object oriented programming language such as Java, Smalltalk, C++, or a combination thereof, as well as conventional procedural programming languages, such as the "C" language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a Local Area Network (LAN) or a Wide Area Network (WAN), or to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, can be implemented by special purpose hardware-based systems that perform the specified functions or operations, or combinations of special purpose hardware and computer instructions.

The units described in the embodiments of the present disclosure may be implemented by software or hardware, wherein the name of a unit does not in some cases constitute a limitation on the unit itself.

The functions described above herein may be performed, at least in part, by one or more hardware logic components. For example, without limitation, exemplary types of hardware logic components that may be used include: field Programmable Gate Arrays (FPGAs), Application Specific Integrated Circuits (ASICs), Application Specific Standard Products (ASSPs), system on a chip (SOCs), Complex Programmable Logic Devices (CPLDs), and the like.

In the context of the present disclosure, a machine-readable medium may be a tangible medium that may contain, or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium would include an electrical connection based on one or more wires, a portable computer diskette, a hard disk, a Random Access Memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The foregoing description is only exemplary of the preferred embodiments of the present disclosure and is illustrative of the principles of the technology employed. It will be appreciated by those skilled in the art that the scope of disclosure involved in the present disclosure is not limited to the technical solutions formed by specific combinations of the above-mentioned technical features, but should also cover other technical solutions formed by any combination of the above-mentioned technical features or their equivalent features without departing from the above concepts disclosed. For example, the above features and the technical features disclosed in the present disclosure (but not limited to) having similar functions are replaced with each other to form the technical solution.

Further, while operations are depicted in a particular order, this should not be understood as requiring that such operations be performed in the particular order shown or in sequential order. Under certain circumstances, multitasking and parallel processing may be advantageous. Likewise, while several specific implementation details are included in the above discussion, these should not be construed as limitations on the scope of the disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A content search method, comprising:
receiving a search keyword, wherein the search keyword is related to a target scenic spot, the target scenic spot comprises a plurality of scenic spot regions, and the plurality of scenic spot regions are obtained by dividing the target scenic spot according to at least one of a geographic location or a scenic spot item;
displaying a plurality of search results on a search result page, wherein each said search result comprises a scenic spot region identifier and at least one video content, which correspond to one said scenic spot region.

2. The content search method according to claim 1, wherein the displaying a plurality of search results on a search result page comprises:
displaying the plurality of search results in a horizontal or vertical arrangement in a first display order on the search result page,
wherein the first display order is determined according to the popularity of the scenic spot regions corresponding to the search results, and the popularity of the scenic spot regions is determined according to the total number of videos posted by tourists who have toured the scenic spot regions.

3. The content search method according to claim 2, wherein the displaying the plurality of search results in a horizontal or vertical arrangement in a first display order comprises:
displaying a scenic spot region identifier and a first video content in each search result in the first display order,
wherein the first video content is determined according to a second display order corresponding to the search result to which the first video content belongs, and the second display order is determined according to at least one of the popularity, quality or post time of the video contents in the search result to which the first video content belongs.

4. The content search method according to claim 3, wherein:
the popularity of each video content is determined based on at least one of the play count, the number of likes, the number of comments, or the like, of the video content; or
the quality of each video content is determined based on the jitter of the video content, or the screen content proportion of the video content.

5. The content search method according to any one of claims 2-4, further comprising:
after the displaying a plurality of search results on a search result page, in response to a first trigger operation on a target search result among the plurality of search results, starting with the first video content in the target search result, playing the video contents in the target search result in sequence.

6. The content search method according to any one of claims 2-5, wherein the displaying the plurality of search results in a horizontal or vertical arrangement in a first display order comprises:
displaying the scenic spot region identifier and a first preset number of video contents in each search result in the first display order,
wherein the first preset number of video contents are determined according to a second display order corresponding to the search result to which the first preset number of video contents belong, and the second display order is determined according to at least one of the popularity, quality or post time of the video contents in the search result to which the first preset number of video contents belong.

7. The content search method according to claim 6, further comprising:
after displaying a plurality of search results on a search result page, in response to a second trigger operation on the plurality of search results, playing the video contents that are completely displayed on the search result page in sequence in a display order of the video contents.

8. The content search method according to any one of claims 1-7, wherein each said search result further comprises a video tag corresponding to each said video content, which is used to suggest a reason for presenting the video content.

9. The content search method according to any one of claims 1-8, wherein the displaying a plurality of search results on a search result page comprises:
displaying a scenic spot map corresponding to a real-time geographic location on the search result page, the scenic spot map including a plurality of map regions each belonging to a scenic spot region;
for each said map region, displaying, in the map region, a search result corresponding to the scenic spot region to which the map region belongs.

10. The content search method according to claim 9, wherein the real-time geographic location is obtained before displaying the plurality of search results on the search result page.

11. The content search method according to any one of claims 1-10, wherein the content type of the video content includes at least one of a scenic spot explanation type, a scenery presentation type, or a highlight moment presentation type.

12. The content search method according to any one of claims 1-11, further comprising:
displaying relevant information of the target scenic spot on the search result page after the receiving a search keyword,
wherein the relevant information of the target scenic spot includes at least one of scenic spot information of the target scenic spot, ticketing information of the target scenic spot, or rating information of the target scenic spot.

13. A content search apparatus, comprising:
a keyword receiving unit configured to receive a search keyword, wherein the search keyword is related to a target scenic spot, the target scenic spot comprises a plurality of scenic spot regions, and the plurality of scenic spot regions are obtained by dividing the target scenic spot according to a geographic location and/or a scenic spot item;
a result display unit configured to display a plurality of search results on a search result page, wherein each said search result comprises a scenic spot region identifier and at least one video content, which correspond to one said scenic spot region.

14. A content search device, comprising:
a memory;
a processor coupled to the memory, wherein the processor is configured to perform the content search method according to any one of claims 1-12 based on instructions stored in the memory.

15. A computer-readable storage medium, wherein the storage medium stores a computer program which, when executed by a processor, causes the processor to implement the content search method according to any one of claims 1-12.

16. A computer program, comprising:
instructions, which, when executed by a processor, cause the processor to perform the content search method according to any one of claims 1-12.
